# EUROPÄISCHE PATENTSCHRIFT

(11) **EP 3 199 826 B1**
(45) Veröffentlichungstag und Bekanntmachung des Hinweises auf die Patenterteilung: **21.08.2019**
(21) Anmeldenummer: 16002709.0
(22) Anmeldetag: 19.12.2016
(51) Int. Cl.: F16B 39/16, F16D 3/223

(54) **VERBINDUNGSVORRICHTUNG**
CONNECTING DEVICE
DISPOSITIF DE CONNEXION

(30) Priorität: 28.01.2016 DE 102016000881
(43) Veröffentlichungstag der Anmeldung: 02.08.2017
(73) Patentinhaber: Neumayer Tekfor Engineering GmbH, 77756 Hausach (DE)
(72) Erfinder: Welle, Jonas, D-77652 Offenburg (DE)

(56) Entgegenhaltungen:
- DE-C1- 4 405 974
- JP-A- 2006 336 755
- US-A- 1 413 024
- US-A- 1 656 118

## Beschreibung

Die vorliegende Erfindung betrifft eine Verbindungsvorrichtung gemäß dem Oberbegriff des ersten Anspruchs. Die Verbindungsvorrichtung dient dabei beispielsweise der Verbindung zweier Bauteile, die axial gegeneinander zu fixieren sind.

Eine gattungsgemäße Verbindungsvorrichtung offenbart die US 1,413,024 A.

Für die Realisierung einer Drehmomentübertragung zwischen einem Gelenk und einer Welle offenbart die EP 1 519 063 B1 eine Verbindungsanordnung, die eine Wellenmutter und eine Spannmutter aufweist. Die Wellenmutter verfügt dabei über einen Bund, der die Spannmutter hintergreift. Hierfür weist die Spannmutter eine nutartige Ausnehmung mit einem Hinterschnitt auf. Für die Montage der Verbindungsvorrichtung benötigen beide Muttern Außenformen, die es erlauben, die Spannmutter hinter den Bund der Wellenmutter einzuführen.

Es ist z. B. im Stand der Technik bekannt, dass bei sog. Doppelmuttern, die der Anbindung z. B. der Längswelle zum Hinterachsgetriebe dienen, eine ovale Außenkontur das Einbringen in eine kreisförmige Innenkontur erlaubt. Dabei wird beispielsweise die wellenseitige Einlegemutter per Hand in die Flanschmutter eingefädelt.

In der WO 2007/044003 A1 wird die Verwendung eine Doppelmutter gezeigt. Dabei verfügt die Einlegemutter über einen radial nach außen ragenden Bund, der in einen radial nach innen ragenden Absatz der Flanschmutter eingebracht wird. Dies geschieht im Stand der Technik beispielsweise durch besagte ovale Kontur des einzulegenden Bundes der Einlegemutter.

Eine Verbindungsanordnung für die Verbindung zwischen einer Welle und einem Gelenk gemäß der DE 10 2009 016 066 A1 verfügt nur über eine einzige Verspannhülse.

Die DE 10 2009 019 435 A1 offenbart eine zweiteilige Verbindungsanordnung mit einer Verbindungs- und einer Verspannmutter. In einer Ausgestaltung umfasst die Verbindungsmutter teilweise die Verspannmutter, wobei ein Sprengring in einer Nut der Verspannmutter die Gegenkontur zum radial nach innen ragenden Absatz der Verbindungsmutter bildet.

Prinzipiell ähnlich ist der Aufbau der Verbindungsanordnung gemäß der DE 10 2004 048 079 A1, die eine Verschraubungshülse und eine Mutter vorsieht.

In der Anordnung gemäß der WO 2008/022625 A1 werden eine Wellenmutter und eine weitere Mutter über Außen- und Gegengewinde miteinander verbunden.

Ein ebenfalls zwei Muttern umfassendes Befestigungsmittel zeigt die DE 10 2011 113 417 A1.

Eine Anordnung mit zwei sich stirnseitig gegenüberliegenden und von einer Überwurfmutter miteinander verbundenen Muttern zeigt die US 1,656,118 A. Dabei verfügt eine Mutter über Ratschenzähne an der Außenseite und die Überwurfmutter verfügt über zugehörige Zähne auf der Innenseite.

Nachteilig am Stand der Technik ist, dass die vorhandenen Verbindungsvorrichtungen meist aufwendig zu montieren sind bzw. dass hierfür spezielle Geometrien (für das Einbringen ineinander) erforderlich sind. Weiterhin tragen derartig vormontierte Verbindungsvorrichtungen das Risiko, dass die Komponenten sich wieder voneinander lösen, da sie sich nur gegenseitig halten und nicht miteinander verbunden sind.

Der Erfindung liegt daher die Aufgabe zugrunde, eine Verbindungsvorrichtung vorzuschlagen, die die Nachteile des Standes der Technik vermeidet, deren Komponenten insbesondere einfach und sicher zu montieren sind und die eine Vereinfachung der Handhabung erlaubt.

Die Erfindung löst die Aufgabe durch eine Verbindungsvorrichtung
mit den Merkmalen des ersten Anspruchs.

Die Bezeichnungen für die drei Muttern dienen nur zur Verdeutlichung und lassen sich entsprechend auch durch erste, zweite und dritte Mutter ersetzen.

Bei der erfindungsgemäßen Verbindungsvorrichtung sind die Flanschmutter und die Einlegemutter mittelbar über die Überschraubmutter miteinander verbunden. Dabei sind die Flanschmutter und die Überschraubmutter über zueinander korrespondierende Gewinde (also Außen- und Innengewinde) miteinander verbunden. Die Einlegemutter und die Überschraubmutter sind durch Überlappung, gegeben durch Bund und Absatz, verliersicher miteinander verbunden.

Eine weitere Vereinfachung der Herstellung der Verbindungsvorrichtung ergibt sich dadurch, dass die Einlegemutter einen Mutternkörper mit einem Körper-Außendurchmesser sowie den radial nach außen gerichteten und den Bund-Außendurchmesser aufweisenden Bund aufweist, und dass der Absatz-Innendurchmesser einerseits größer als der Körper-Außendurchmesser und andererseits kleiner als der Bund-Außendurchmesser ist. Dies erlaubt es, dass die Überschraubmutter über den Mutternkörper der Einlegemutter gestülpt werden kann, bis der Bund und der Absatz die weitere Bewegung hemmen. Durch die zueinander korrespondierenden Geometrien und Dimensionierungen werden also Überschraubmutter und Einlegemutter gegeneinander gehalten. Weiterhin erlaubt das Innengewinde der Überschraubmutter die Verbindung mit dem Außengewinde der Flanschmutter.

Insgesamt liegen sich die Flanschmutter und die Einlegemutter stirnseitig einander gegenüber und zwar mit den Stirnseiten, in deren Richtung sich das Außengewinde bzw. der Bund befinden.

Da die Überschraubmutter der Verbindung der beiden anderen Muttern dient, ist eine ovale Außenkontur zum Einführen der Einlegemutter in die Umrandung der Flanschmutter nicht mehr erforderlich. Hierdurch wird der Zusammenbau deutlich vereinfacht. Gleiches gilt auch für die vereinfachte Abdichtung. Die Verbindungsvorrichtung erlaubt vor allem auch die präzise Einstellung der Vorspannung eines Lagers. Zudem wird so ein Dichtsitz realisiert.

Der Bund der Einlegemutter weist eine kreisförmige Außenkontur auf. Die Außenkontur ist daher rund und nicht oval wie im Stand der Technik.

Die Flanschmutter weist einen Flansch auf. Der Flansch befindet sich dabei in einer Ausgestaltung in Richtung der Stirnseite, die das Außengewinde trägt. Daher folgt - in dieser Ausgestaltung - ausgehend von diesem einen Ende der Flanschmutter der Flansch hinter dem Außengewinde. Die Flanschmutter und die Überschraubmutter sind derartig ausgestaltet und aufeinander abgestimmt, dass der Flansch die axiale (durch die Drehung von Innen- und Außengewinde) Bewegung der Überschraubmutter in Richtung der Flanschmutter begrenzt und einen Anschlag bildet.

Eine Ausgestaltung beinhaltet, dass die Flanschmutter über eine Klebefläche als eine Variante einer Gewindesicherung verfügt. Diese befindet sich insbesondere im Bereich des Innengewindes der Flanschmutter.

Eine weitere Ausgestaltung sieht vor, dass die Einlegemutter eine Klebefläche aufweist. Diese befindet sich vorzugsweise im Bereich des Innengewindes der Einlegemutter.

In einer Ausgestaltung ist vorgesehen, dass sich zwischen der Überschraubmutter und der Flanschmutter eine Gewindesicherung befindet. Die Gewindesicherung ist dabei beispielsweise - wie bei den beiden zuvor genannten Ausgestaltungen - ebenfalls in Form einer Klebefläche ausgeführt.

Um die Drehmomente aufzubringen, die zur Befestigung der Flanschmutter auf einem Gegenstück führen, sieht es eine Ausgestaltung vor, dass die Flanschmutter eine Vielkant-Außenseite aufweist. Die Flanschmutter verfügt in dieser Ausgestaltung somit über eine Viel- oder Mehrkant-Außenseite.

Die Einlegemutter verfügt über eine Vielkant-Außenseite zum Aufbringen einer Kraft.

In einer alternativen oder ergänzenden Ausgestaltung verfügt die Überschraubmutter über eine Vielkant-Außenseite zum Aufbringen einer Kraft.

Im Einzelnen gibt es eine Vielzahl von Möglichkeiten, die erfindungsgemäße Verbindungsvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: einen Schnitt durch eine erfindungsgemäße Verbindungsvorrichtung und
- Fig. 2: einen Schnitt durch eine erfindungsgemäße Verbindungsvorrichtung im verbauten Zustand.

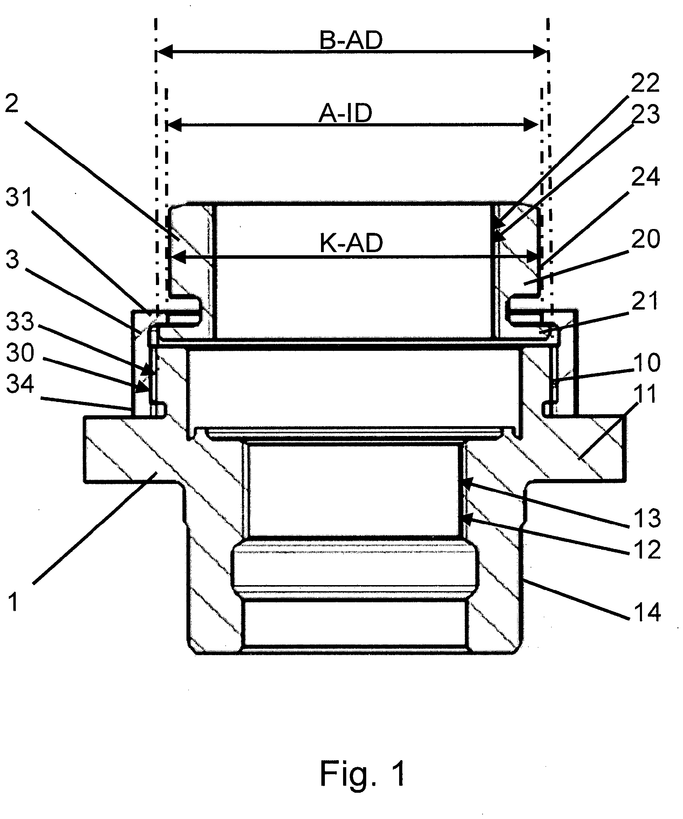

Die Fig. 1 zeigt einen Schnitt durch eine Ausgestaltung der dreiteiligen erfindungsgemäßen Verbindungsvorrichtung mit der Flanschmutter 1, der Einlegemutter 2 und der Überschraubmutter 3. Die Bezeichnungen Flansch- und Einlegemutter passen auf das gezeigte Beispiel, stellen an sich jedoch keine Beschränkung dar. Es handelt sich insbesondere auch um Bezeichnungen, die bei den Doppelmuttern gemäß dem Stand der Technik üblich sind.

Die Flanschmutter 1 verfügt in dem dargestellten Beispiel über ein Außengewinde 10, einen Flansch 11, ein Innengewinde 12, eine Klebefläche 13 sowie über eine Vielkant-Außenseite 14. Axial unterhalb des Außengewindes 10 und damit vor dem Flansch 11 befindet sich ein Freistich, der für die Erzeugung des Gewindes 10 erforderlich ist. Weiterhin wird dadurch ein sauberer Anschlag der befestigen Überschraubmutter 3 an der Flanschmutter 1 gewährleistet.

Die Einlegemutter 2 weist einen Mutternkörper 20, einen radial nach außen weisenden Bund 21, ein Innengewinde 22, eine Klebefläche 23 sowie eine Vielkant-Außenseite 24 auf. Dabei hat der Mutterkörper 20 einen Körper-Außendurchmesser K-AD und hat der Bund 21 einen Bund-Außendurchmesser B-AD. Der Bund 21 überragt dabei den Mutternkörper 20, so dass der Bund-Außendurchmesser B-AD größer als der Körper-Außendurchmesser K-AD ist. Die Einlegemutter 2 liegt dabei mit dem Bund 21 der Stirnseite der Flanschmutter 1 gegenüber, die das Außengewinde 10 trägt.

Wie zu sehen, unterscheiden sich die Innendurchmesser von Flansch- 1 und Einlegemutter 2 voneinander.

Die Klebefläche 13 der Flanschmutter 1 und die Klebefläche 23 der Einlegemutter 2 dienen dabei der Sicherung der jeweiligen Mutter im befestigen Zustand, also z. B. an der Welle bzw. am Gelenkteil.

Die beiden Vielkant-Außenseiten 14 bzw. 24 erlauben es, eine Kraft bzw. ein Drehmoment aufzubringen, um die beiden Muttern 1 bzw. 2 jeweils im eingebauten Zustand einzubauen.

Die Überschraubmutter 3 verfügt über ein Innengewinde 30, über einen stirnseitigen Absatz 31, über eine Gewindesicherung in Form einer Klebestelle 33 sowie über ein Vielkant-Außenseite 34. Der Absatz 31 verfügt an seinen Innenseite über einen Absatz-Innendurchmesser A-ID. In diesem Zusammenhang sei auch noch einmal betont, dass die bei dem gezeigten Beispiel besprochenen Durchmesser A-ID, K-AD, B-AD sich jeweils auf kreisförmige Innen- bzw. Außenkonturen beziehen. Dies im Gegensatz zum Stand der Technik.

Das Innengewinde 30 der Überschraubmutter 3 und das Außengewinde 10 der Flanschmutter 1 sind zueinander gehörig und erlauben eine Schraubverbindung zwischen der Überschraubmutter 3 und der Flanschmutter 1. Die den Absatz 31 tragende Stirnseite der Überschraubmutter 3 ist der Einlegemutter 2 zugewandt.

Indem einerseits der Absatz-Innendurchmesser A-ID des Absatzes 31 der Überschraubmutter 3 kleiner als der Bund-Außendurchmesser B-AD des Bundes 21 der Einlegemutter 2 ist, überlappt der Absatz 31 mit dem Bund 21 und verhindert insbesondere eine axiale Bewegung der Einlegemutter 2 fort von der Flanschmutter 1, so dass sich ein Verlierschutz ergibt.

Indem jedoch andererseits der Absatz-Innendurchmesser A-ID des Absatzes 31 der Überschraubmutter 3 größer ist als der Körper-Außendurchmesser K-AD des Mutternkörpers 20 der Einlegemutter 2, kann die Überschraubmutter 3 über den Mutternkörper 20 gestülpt werden. Hierdurch ist es insbesondere möglich, auf die im Stand der Technik teilweise erforderlichen ovalen Außenkonturen zu verzichten. Somit kann die Innenform des Absatzes 31 der Überschraubmutter 3 insbesondere kreisförmig ausgeführt sein.

Die Klebefläche 33 zwischen Überschraubmutter 3 und Flanschmutter 1 dient auch hier als Sicherung des Gewindes gegenüber einem Lösen.

Für ein Zusammenbau der Verbindungsvorrichtung werden zunächst die Flanschmutter 1 und die Einlegemutter 2 einander gegenüber positioniert. Dann wird die Überschraubmutter 3 über den Mutternkörper 20 der Einlegemutter 2 geführt und dann mit ihrem Innengewinde 30 und dem stirnseitigen Außengewinde 10 der Flanschmutter 1 befestigt.

Hierbei ist die Höhe der Überschraubmutter 3 derartig gewählt, dass sie hier den Flansch 11 der Flanschmutter 1 berührt und dabei nur ein relativ geringes axiales Spiel für den Bund 21 der Einlegemutter 2 gegenüber der stirnseitigen Endfläche der Flanschmutter 1 erlaubt.

Weiterhin sind der Außendurchmesser K-AD des Mutternkörpers 20 der Einlegemutter 2 und der Innendurchmesser A-ID des Absatzes 31 der Überschraubmutter 3 so bemessen, dass die Überschraubmutter 3 zwar über den Mutternkörper 20 geführt werden kann, jedoch mit so geringem Spiel, dass die Überlappung zwischen dem Absatz 31 und dem Bund 21 der Einlegemutter 2 möglichst groß ist. D. h. der Innendurchmesser A-ID des Absatzes 31 und der Außendurchmesser K-AD des Mutternkörpers 20 sollten sich relativ ähnlich sein.

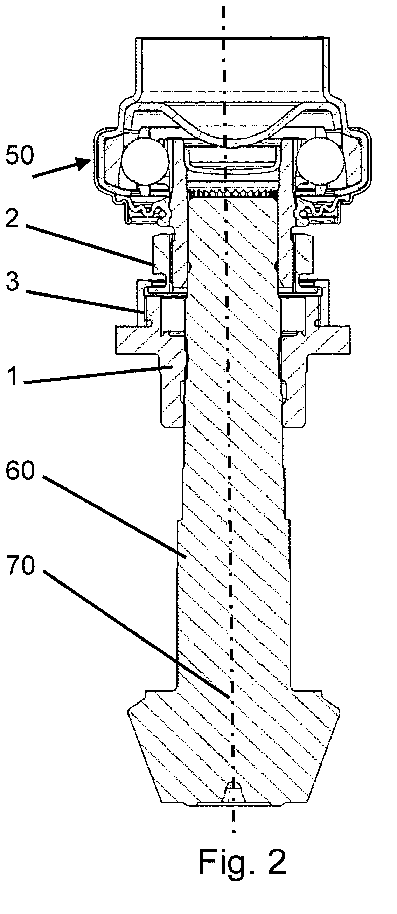

Die Fig. 2 zeigt den Zustand, in dem die Verbindungsvorrichtung mit Flansch- 1, Einlege-2 und Überschraubmutter 3 ein Innenteil eines Gleichlaufgelenks 50 mit einer Ritzelwelle 60 verbindet. Zu erkennen ist hier auch die symmetrische Ausgestaltung der Verbindungsvorrichtung um die Längsachse 70, die hier zugleich Längsachse der Verbindungsvorrichtung sowie der Welle 60 bzw. des Gelenks 50 ist. Insgesamt ist die hier gezeigte Verbindungsvorrichtung bzw. sind die drei Muttern 1, 2, 3 rotationssymmetrisch um die Längsachse 70 ausgestaltet.

## Patentansprüche

1. Verbindungsvorrichtung,
aufweisend eine Flanschmutter (1), eine Einlegemutter (2) und eine Überschraubmutter (3),
wobei die Flanschmutter (1) einen Flansch (11) aufweist,
wobei die Flanschmutter (1) derartig ausgestaltet ist, dass die Flanschmutter (1) stirnseitig ein Außengewinde (10) aufweist,
wobei die Einlegemutter (2) derartig ausgestaltet ist, dass die Einlegemutter (2) einen radial nach außen gerichteten und einen Bund-Außendurchmesser (B-AD) aufweisenden Bund (21) aufweist,
wobei die Überschraubmutter (3) derartig ausgestaltet ist, dass die Überschraubmutter (3) ein Innengewinde (30) und einen radial nach innen gerichteten und einen Absatz-Innendurchmesser (A-ID) aufweisenden Absatz (31) aufweist,
wobei die Einlegemutter (2) und die Überschraubmutter (3) derartig ausgestaltet und aufeinander abgestimmt sind, dass der Absatz-Innendurchmesser (A-ID) kleiner als der Bund-Außendurchmesser (B-AD) ist,
wobei die Flanschmutter (1) und die Überschraubmutter (3) derartig ausgestaltet und aufeinander abgestimmt sind, dass das Innengewinde (30) der Überschraubmutter (3) und das Außengewinde (10) der Flanschmutter (1) Gegengewinde zueinander sind, und
wobei die Flanschmutter (1) und die Überschraubmutter (3) derartig ausgestaltet und aufeinander abgestimmt, dass der Flansch (11) der Flanschmutter (1) eine axiale Bewegung der Überschraubmutter (3) in Richtung der Flanschmutter (1) begrenzt und einen Anschlag bildet,
**dadurch gekennzeichnet,**
**dass** der Bund (21) der Einlegemutter (2) eine kreisförmige Außenkontur aufweist, dass die Einlegemutter (2) derartig ausgestaltet ist, dass die Einlegemutter (2) einen Mutternkörper (20) mit einem Körper-Außendurchmesser (K-AD) sowie den radial nach außen gerichteten und den Bund-Außendurchmesser (B-AD) aufweisenden Bund (21) aufweist,
**dass** die Einlegemutter (2) und die Überschraubmutter (3) derartig ausgestaltet und aufeinander abgestimmt sind, dass der Absatz-Innendurchmesser (A-ID) größer als der Körper-Außendurchmesser (K-AD) ist, und
**dass** der Mutternkörper (20) der Einlegemutter (2) eine Vielkant-Außenseite (24) aufweist.

2. Verbindungsvorrichtung nach Anspruch 1,
**dadurch gekennzeichnet,**
**dass** die Flanschmutter (1) eine Klebefläche (13) im Bereich des Innengewindes (12) aufweist, und
**dass** die Einlegemutter (2) eine Klebefläche (23) im Bereich des Innengewindes (22) aufweist.

3. Verbindungsvorrichtung nach Anspruch 1 oder 2,
**dadurch gekennzeichnet,**
**dass** sich zwischen der Überschraubmutter (3) und der Flanschmutter (1) eine Gewindesicherung (33) in Form einer Klebefläche befindet.

## Claims

1. Connecting device,
comprising a flange nut (1), an insert nut (2) and a cap nut (3),
whereby the flange nut (1) has a flange (11),
whereby the flange nut (1) is designed in such a way that the flange nut (1) has an external thread (10) on the face,
whereby the insert nut (2) is designed in such a way that the insert nut (2) has a collar (21) which is directed radially outwards and has a collar outer diameter (B-AD),
whereby the cap nut (3) is designed in such a way that the cap nut (3) has an internal thread (30) and a shoulder (31) directed radially inwards and having a shoulder internal diameter (A-ID),
whereby the insert nut (2) and the cap nut (3) are designed and matched to each other in such a way that the shoulder inner diameter (A-ID) is smaller than the collar outer diameter (B-AD),
whereby the flange nut (1) and the cap nut (3) are designed and matched to one another in such a way that the internal thread (30) of the cap nut (3) and the external thread (10) of the flange nut (1) are counter-threads to one another, and
whereby the flange nut (1) and the cap nut (3) are designed and matched to one another in such a way that the flange (11) of the flange nut (1) limits an axial movement of the cap nut (3) in the direction of the flange nut (1) and forms a stop,
**characterized by** the fact that
the collar (21) of the insert nut (2) has a circular outer contour, that the insert nut (2) is designed in such a way that the insert nut (2) has a nut body (20) with a body outer diameter (K-AD) and the collar (21) which is directed radially outwards and has the collar outer diameter (B-AD),
the insert nut (2) and the cap nut (3) are designed and matched to one another in such a way that the shoulder inner diameter (A-ID) is greater than the body outer diameter (K-AD), and
that the nut body (20) of the insert nut (2) has a polygonal outer side (24).

2. Connecting device according to Claim 1,
**characterized by the fact that**
the flange nut (1) has an adhesive surface (13) in the area of the internal thread (12), and
that the insert nut (2) has an adhesive surface (23) in the area of the internal thread (22).

3. Connecting device according to Claim 1 or 2,
**characterized by the fact that**
there is a thread locking device (33) in the form of an adhesive surface between the cap nut (3) and the flange nut (1).

## Revendications

1. Dispositif de liaison
contenant une bride-écrou (1), un écrou incorporé (2) et un écrou moleté (3), où la bride-écrou (1) est dotée d'une bride (11),
où la bride-écrou (1) est agencée de sorte que la bride-écrou (1) est dotée d'un filetage extérieur (10) sur la face avant,
où l'écrou incorporé (2) est agencé de sorte que l'écrou incorporé (2) ait une collerette (21) orientée radialement vers l'extérieur et un diamètre extérieur de collerette (DE-Coll).
où l'écrou moleté (3) est agencé de sorte que l'écrou moleté (3) ait un filetage intérieur (30), avec un palier (31) orienté radialement vers l'intérieur et un diamètre intérieur de palier (DE-P),
où l'écrou incorporé (2) et l'écrou moleté (3) sont agencés et alignés de sorte que le diamètre intérieur du palier (DE-P) soit inférieur au diamètre extérieur de la collerette (DE-Coll),
où la bride-écrou (1) et l'écrou moleté (3) sont agencés et alignés de sorte que le filetage intérieur (30) de l'écrou moleté (3) et le filetage extérieur (10) de la bride-écrou (1) forment un contre-filetage réciproque et
où la bride-écrou (1) et l'écrou moleté (3) sont agencés et alignés de sorte que la bride (11) de la bride-écrou (1) limite un mouvement axial de l'écrou moleté (3) dans la direction de la bride-écrou (1) et forment une butée,
**caractérisé par**
un contour extérieur circulaire de la collerette (21) de l'écrou incorporé (2), d'un agencement de l'écrou incorporé (2) de sorte que l'écrou incorporé (2) ait un corps d'écrou (20) et un diamètre extérieur du corps, avec une collerette (21) orientée vers l'extérieur (DE-Corps) et un diamètre extérieur de collerette (DE-Coll),
un alignement de l'écrou incorporé (2) et de l'écrou moleté (3) de sorte que le diamètre intérieur du palier (DE-P) soit supérieur au diamètre extérieur du corps (DE-Corps) et que
le corps d'écrou (20) de l'écrou incorporé (2) ait un aspect extérieur multi-pans (24).

2. Dispositif de liaison selon l'exigence **1,**
**caractérisé par**
la bride-écrou (1) ayant une surface de colle (13) dans la partie du filetage intérieur (12) et
la l'écrou incorporé (2) ayant une surface de colle (23) dans la partie du filetage intérieur (22).

3. Dispositif de liaison selon l'exigence 1 ou 2,
**caractérisé par**
un frein filet (33) sous forme d'une surface de colle entre l'écrou moleté (3) et la bride-écrou (1).
